# FASCICULE DE BREVET EUROPEEN

(11) **EP 3 407 454 B1**
(45) Date de publication et mention de la délivrance du brevet: **12.02.2020**
(21) Numéro de dépôt: 18174000.2
(22) Date de dépôt: 24.05.2018
(51) Int. Cl.: H02J 3/06, H02J 3/32, H02J 3/36, B60L 55/00, B60L 53/63, H02J 3/12, H02J 3/38, H02J 7/34

(54) **DISPOSITIF D'INTERFAÇAGE ENTRE UN RÉSEAU ÉLECTRIQUE GÉNÉRAL ET UN RÉSEAU ÉLECTRIQUE LOCAL PERMETTANT UN ÉCHANGE LOCAL D'ÉNERGIE**
SCHNITTSTELLENVORRICHTUNG ZWISCHEN EINEM ALLGEMEINEN STROMNETZ UND EINEM LOKALEN STROMNETZ, DIE EINEN LOKALEN ENERGIEAUSTAUSCH ERMÖGLICHT
INTERFACE DEVICE BETWEEN A GENERAL POWER GRID AND A LOCAL POWER GRID ALLOWING A LOCAL ENERGY EXCHANGE

(30) Priorité: 24.05.2017 FR 1754625
(43) Date de publication de la demande: 28.11.2018
(73) Titulaire: COMMISSARIAT À L'ÉNERGIE ATOMIQUE ET AUX ÉNERGIES ALTERNATIVES, 75015 Paris (FR)
(72) Inventeur: THOMAS, Sigrid, 38054 GRENOBLE Cedex 9 (FR); BUTTIN, Hervé, 38054 GRENOBLE Cedex 9 (FR)
(74) Mandataire: GIE Innovation Competence Group

(56) Documents cités:
- EP-A1- 1 990 893
- EP-A1- 2 858 200
- EP-A1- 3 096 434
- EP-A2- 2 469 238
- US-A1- 2014 129 040
- US-A1- 2015 244 172
- US-A1- 2016 204 611

## Description

### DOMAINE TECHNIQUE

Le domaine de l'invention est celui de la gestion d'un réseau électrique, plus particulièrement de la gestion d'un réseau électrique local pouvant être relié à un réseau électrique principal.

### ÉTAT DE LA TECHNIQUE ANTÉRIEURE

Il est connu d'avoir un ensemble d'équipements électriques reliés ensemble par un réseau électrique local permettant l'échange d'énergie électrique entre des équipements producteurs, tels que des panneaux photovoltaïques, et des équipements consommateurs, tels qu'un chauffe-eau.

Un tel réseau électrique local peut être équipé de façon à fonctionner la majorité du temps en autonomie, sans recours à un réseau électrique général. Pour ce faire, les excédents de production des équipements producteurs sont généralement stockés dans des éléments de stockage d'énergie, tels qu'une batterie, afin de permettre une alimentation du réseau en dehors des plages de production des équipements de production.

Le réseau électrique local peut être équipé de lignes électriques pouvant véhiculer un signal électrique alternatif, par exemple de type 230V alternatif en Europe. Un tel réseau AC est généralement « gouverné » par un onduleur maître qui contrôle la tension et la fréquence Fac du réseau local. Cet onduleur maître est associé à une batterie principale qui permet à l'onduleur maître d'injecter ou de soutirer du courant du réseau électrique local pour assurer l'équilibre du réseau.

Ce type de réseau local est généralement approvisionné par des équipements producteurs intermittents, notamment dans le cas où les équipements producteurs correspondent à des sources d'énergie électrique renouvelable. Dans le cas où la source d'alimentation principale du réseau électrique est intermittente, par exemple de type photovoltaïque, l'onduleur maître est généralement associé à une batterie principale disposant d'une capacité de stockage importante et pouvant délivrer une puissance significative afin d'assurer une continuité de service. Il est en effet d'usage de prévoir une batterie pouvant délivrer une puissance Pbatt au moins égale à 2 fois la puissance Ppv pouvant être délivrée par les panneaux photovoltaïques.

Un inconvénient des systèmes existants est que la batterie devant être associée à l'onduleur maître est de taille importante et donc de coût important et d'encombrement significatif.

Par ailleurs, en dehors des sites totalement isolés, un dispositif de connexion au réseau est généralement prévu. Ce dispositif fonctionne en tout ou rien. Ainsi, le réseau local est soit totalement déconnecté du réseau principal et fonctionne en autonomie, soit relié au réseau principal. Quand le réseau local est relié au réseau principal, le réseau principal impose la fréquence/tension du réseau local. Dans ce dernier cas, le ou les onduleurs reliés au réseau local sont soit éteints, soit en mode esclave.

Quand le réseau électrique local est relié au réseau électrique général, il n'y a généralement plus de gestion locale de l'énergie électrique soutirée, et injectée, par les équipements consommateurs, ou producteurs. Dès lors, l'énergie soutirée, ou injectée, peut devenir importante et cela nécessite d'avoir un raccordement au réseau électrique général qui soit dimensionné pour pouvoir fournir, et éventuellement recevoir, des courants élevés et/ou une énergie cumulée importante.

Un inconvénient des systèmes électriques ilotables actuels est qu'ils ne permettent pas de maintenir une gestion locale satisfaisante lorsqu'ils sont raccordés au réseau. En outre, ils ne permettent pas de réduire de façon vraiment significative les contraintes de dimensionnement du réseau électrique général auquel ils sont reliés.

Le document EP2858200 décrit un système électrique comportant plusieurs systèmes locaux connectés en série à un réseau électrique général, chaque système local comportant un dispositif d'interfaçage formé d'une batterie et d'un onduleur maître.

Le document US2016/204611 décrit un dispositif interfaçage comprenant un organe de commande conçu pour permettre un interfaçage entre un service électrique fonctionnant à une première fréquence et tension, et un micro-réseau fonctionnant à une seconde fréquence et tension, par la détection d'une fréquence de fonctionnement d'un générateur et la commande d'une circulation de courant entre le service électrique et le micro-réseau.

Le document EP2469238 décrit un réseau électrique local permettant un transfert d'énergie électrique entre un équipement producteur d'énergie électrique intermittent de type photovoltaïque et des équipements consommateurs d'énergie électrique.

### EXPOSÉ DE L'INVENTION

L'invention a pour objectif de remédier au moins en partie aux inconvénients précités de l'art antérieur. Pour cela, un objet de l'invention est un système électrique comportant:
∘ un réseau électrique local;
∘ au moins un équipement électrique consommateur, et au moins un équipement électrique producteur, reliés au réseau électrique local;
∘ un dispositif d'interfaçage destiné à relier le réseau électrique local à un réseau électrique général, comprenant :
   - une borne de connexion générale destinée à être reliée au réseau électrique général, et une borne de connexion locale destinée à être reliée au réseau électrique local ;
   - une batterie ;
   - un dispositif onduleur bidirectionnel pouvant fonctionner en mode maître dont une sortie est reliée à ladite borne de connexion locale et une entrée est reliée à ladite batterie, le dispositif onduleur étant apte à fonctionner dans un mode de modulation de fréquence dans lequel la fréquence d'un signal de sortie délivrée sur sa sortie est variable en fonction d'une puissance échangée entre le dispositif onduleur bidirectionnel maître et ledit réseau électrique local ;
      - un dispositif chargeur dont une entrée est reliée à ladite borne de connexion générale et une sortie reliée à ladite entrée du dispositif onduleur ;
      - un dispositif de commande apte à commander la mise en route du dispositif chargeur quand le dispositif onduleur maître fonctionne dans ledit mode de régulation de fréquence et qu'un besoin de faire transiter de l'énergie du réseau électrique général vers le réseau électrique local est identifié par le dispositif de commande.

Au moins l'un desdits équipements électriques comprend un dispositif de mesure de la fréquence du réseau électrique local, et un dispositif de contrôle apte à modifier la puissance électrique consommée ou injectée par ledit équipement électrique sur le réseau électrique local, en fonction de la fréquence du réseau électrique local. Ainsi, le dispositif d'interfaçage assure une gestion locale des équipements électriques reliés au réseau électrique local, lorsque le dispositif onduleur bidirectionnel fonctionne en mode maître, de sorte que la demande en énergie soit sensiblement égale à la fourniture d'énergie desdits équipements électriques du réseau électrique local.

Selon un mode de réalisation du dispositif d'interfaçage, pour identifier un besoin de faire transiter de l'énergie du réseau électrique général vers le réseau électrique local, le dispositif de commande tient compte d'un paramètre physique de la batterie, par exemple le niveau d'état de charge de la batterie et/ou une valeur de puissance maximale délivrable ou absorbable par la batterie.

Selon un mode de réalisation du dispositif d'interfaçage, le dispositif comprend en outre un interrupteur principal relié d'une part à ladite borne de connexion générale destinée à être reliée au réseau électrique général et d'autre part à ladite borne de connexion locale destinée à être reliée au réseau électrique locale. Le dispositif d'interfaçage peut être placé dans :
∘ un mode de raccordement direct dans lequel l'interrupteur principal est fermé, reliant directement les bornes principale et locale, le dispositif onduleur bidirectionnel étant alors soit éteint soit dans un mode esclave ; ou
∘ un mode de raccordement indirect dans lequel l'interrupteur principal est ouvert, le dispositif onduleur bidirectionnel étant alors actif en mode maître ; et
le dispositif de commande principal étant apte à commander la fermeture ou l'ouverture de l'interrupteur principal pour faire passer le dispositif d'interfaçage respectivement dans un mode de raccordement direct ou indirect.

Selon un mode de réalisation du dispositif d'interfaçage, le dispositif de commande est apte à commander le dispositif onduleur bidirectionnel et le dispositif chargeur afin que le dispositif d'interfaçage fonctionne dans un état donné parmi au moins trois états possibles :
- un premier état (A) dans lequel le dispositif onduleur bidirectionnel (10) fonctionne dans un mode de régulation de la tension du réseau électrique local et le chargeur est inactif ;
- un deuxième état (B) dans lequel le dispositif onduleur bidirectionnel (10) fonctionne dans un mode de modulation de la fréquence du réseau électrique local et le chargeur est inactif ;
- un troisième état (C) dans lequel le dispositif onduleur bidirectionnel (10) fonctionne dans un mode de modulation de la fréquence du réseau électrique local et le chargeur est actif.

Selon un mode de réalisation du dispositif d'interfaçage, le dispositif d'interfaçage est apte à être placé dans un mode de raccordement indirect pour les premier, deuxième et troisième états, et il peut fonctionner dans un mode de raccordement direct pour un quatrième état dans lequel le chargeur est inactif.

Selon un mode de réalisation du dispositif d'interfaçage, le dispositif comprend en outre un onduleur esclave placé en parallèle du chargeur, l'entrée de l'onduleur esclave étant reliée à l'entrée de l'onduleur bidirectionnel et la sortie de l'onduleur esclave étant reliée au réseau électrique principal, le dispositif de commande étant apte à commander la mise en route de l'onduleur esclave quand le dispositif onduleur maître fonctionne dans ledit mode de régulation de fréquence et qu'un besoin de faire transiter de l'énergie du réseau électrique local vers le réseau électrique général est identifié par le dispositif de commande.

Selon une variante du mode de réalisation du dispositif d'interfaçage susmentionné, l'onduleur esclave est inactif dans les premier, deuxième, troisième et quatrième états, et le dispositif d'interfaçage peut fonctionner dans un cinquième état dans lequel l'onduleur esclave est actif et l'onduleur bidirectionnel maître (10) fonctionne dans un mode de modulation de la fréquence du réseau électrique local.

Un autre objet de la présente invention est un système incluant un dispositif d'interfaçage selon un mode de réalisation susmentionné, le dispositif d'interfaçage étant relié à un réseau électrique général et relié à un réseau électrique local, et dans lequel le réseau électrique local est relié à des équipements électriques comprenant chacun un dispositif de mesure de la fréquence du réseau local et un dispositif de contrôle apte à modifier la puissance consommée ou injectée par l'équipement électrique sur le réseau local en fonction de la fréquence du réseau local.

Selon un mode de réalisation du système susmentionné, au moins un équipement électrique comprend en outre un dispositif de paramétrage de son dispositif de contrôle, le paramétrage du dispositif de contrôle permettant de modifier la loi de commande appliquée par le dispositif de contrôle sur l'injection ou le soutirage de puissance en fonction de la fréquence du réseau électrique local.

Un autre objet de la présente invention est une borne de recharge d'un véhicule pouvant constituer un équipement électrique d'un système d'interfaçage selon un des modes de réalisation susmentionnés, la borne comprenant un chargeur apte à recharger une batterie dudit véhicule, un dispositif de mesure de la fréquence du réseau électrique auquel la borne est reliée, et comprenant un dispositif de contrôle recevant la mesure de fréquence et apte à commander le chargeur pour faire varier la puissance prélevée sur le réseau électrique par le chargeur en fonction de la fréquence mesurée sur le réseau électrique local.

Selon un mode de réalisation de la borne de recharge susmentionnée, la borne de recharge comprend en outre un onduleur esclave apte à prélever de l'énergie de la batterie et à injecter de l'énergie sur le réseau électrique auquel est reliée la borne de recharge, et ledit dispositif de contrôle commande l'onduleur esclave en fonction de la fréquence du réseau électrique.

Selon un mode de réalisation du système susmentionné, le système comprend un équipement électrique constitué d'un dispositif d'interface placé entre le réseau électrique et un appareil électrique se comportant comme une résistance électrique, le dispositif d'interface modifiant la puissance transférée audit appareil électrique en fonction de la fréquence du réseau électrique local.

Selon un mode de réalisation du système susmentionné, un équipement électrique relié au réseau local comprend un second dispositif d'interfaçage relié à un second réseau électrique local, le second dispositif d'interfaçage comprenant un dispositif de mesure de la fréquence du premier réseau local et le dispositif de commande du second dispositif d'interfaçage étant apte à tenir compte de la mesure de fréquence du premier réseau local pour commander l'onduleur bidirectionnel maître, le chargeur et éventuellement l'onduleur esclave de ce second dispositif d'interfaçage.

Selon un mode de réalisation du système susmentionné, un équipement électrique est un véhicule incluant une batterie interne, un chargeur permettant la recharge de la batterie interne en prélevant de l'énergie sur le réseau local, et comprenant un dispositif de mesure de la fréquence du réseau local et un dispositif de contrôle apte à modifier la puissance prélevée par le chargeur en fonction de la fréquence mesurée sur le réseau électrique local.

Selon un mode de réalisation du système susmentionné, le véhicule comprend en outre un onduleur esclave permettant de prélever de l'énergie dans la batterie pour l'injecter sur le réseau local, et dans lequel le dispositif de contrôle est apte à modifier la puissance injectée par l'onduleur esclave en fonction de la fréquence mesurée sur le réseau électrique local.

Le système électrique peut comporter, outre l'une quelconque des caractéristiques précédentes :
∘ au moins un réseau électrique local, dit secondaire, relié audit réseau électrique local ;
∘ au moins un équipement électrique consommateur secondaire, et au moins un équipement électrique producteur secondaire, reliés au réseau électrique local secondaire, au moins l'un desdits équipements électriques secondaires comprenant un dispositif de mesure de la fréquence du réseau électrique local secondaire, et un dispositif de contrôle apte à modifier la puissance électrique consommée ou injectée par ledit équipement électrique secondaire sur le réseau électrique local secondaire, en fonction de la fréquence du réseau électrique local secondaire ;
∘ au moins un second dispositif d'interfaçage, relié au réseau électrique local et au réseau électrique secondaire, comprenant une batterie, un dispositif onduleur bidirectionnel, un dispositif chargeur et un dispositif de commande, le dispositif d'interfaçage secondaire assure, lorsque l'onduleur bidirectionnel fonctionne en mode maître, une gestion locale des équipements électriques reliés au réseau électrique local secondaire, de sorte que la demande en énergie soit sensiblement égale à la fourniture d'énergie desdits équipements électriques secondaires.

Un autre objet de l'invention est un dispositif d'interfaçage entre un réseau électrique général et un réseau électrique local comprenant :
- une borne de connexion générale destinée à être reliée au réseau électrique général ;
- une borne de connexion locale destinée à être reliée au réseau électrique local ;
- une batterie;
- un dispositif onduleur bidirectionnel pouvant fonctionner en mode maître dont une sortie est reliée à ladite borne de connexion locale et une entrée est reliée à ladite batterie, le dispositif onduleur étant apte à fonctionner dans un mode de modulation de fréquence dans lequel la fréquence d'un signal de sortie délivrée sur sa sortie est variable en fonction de la puissance échangée par le dispositif onduleur bidirectionnel maître avec ledit réseau électrique local ; le dispositif comprenant en outre :
- un dispositif onduleur dont une sortie est reliée à ladite borne de connexion générale et une entrée reliée à ladite entrée du dispositif onduleur ;
- un dispositif de commande apte à commander la mise en route de l'onduleur esclave quand le dispositif onduleur maître fonctionne dans ledit mode de régulation de fréquence et qu'un besoin de faire transiter de l'énergie du réseau électrique local vers le réseau électrique général est identifié par le dispositif de commande.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
La figure 1 illustre un exemple de réseau électrique local pour lequel la présente invention peut être mise en œuvre ;
Les figures 2 et 3 illustrent un premier mode de réalisation d'un dispositif d'interfaçage selon la présente invention ;
La figure 4 illustre différents équipements électriques susceptibles d'être reliés à un réseau local, ces équipements électriques étant équipés de dispositifs de mesure et de contrôle leur permettant avantageusement d'être pilotés par un onduleur maître local d'un dispositif d'interfaçage selon la présente invention relié au réseau local ;
La figure 5 illustre un mode de réalisation d'une borne de recharge pour véhicule susceptible d'être reliée à un réseau électrique sur lequel est appliquée une gestion de l'injection et du soutirage d'énergie électrique au moyen d'une variation de la fréquence du réseau électrique ;
La figure 6 illustre un dispositif de régulation de la puissance prélevée par une charge résistive, pouvant être utilisé dans un réseau électrique sur lequel est appliquée une gestion de l'injection et du soutirage d'énergie électrique au moyen d'une variation de la fréquence du réseau électrique ;
La figure 7 est un diagramme d'état illustrant le fonctionnement d'un dispositif d'interfaçage selon un mode de réalisation de la présente invention ;
La figure 8 illustre différentes valeurs d'état de charge utilisées dans le fonctionnement d'un dispositif d'interfaçage selon un mode de réalisation de la présente invention ;
La figure 9 illustre un second mode de réalisation d'un dispositif d'interfaçage selon la présente invention ; et
la figure 10 est un diagramme d'état illustrant le fonctionnement d'un dispositif d'interfaçage selon un second mode de réalisation de la présente invention.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre elles.

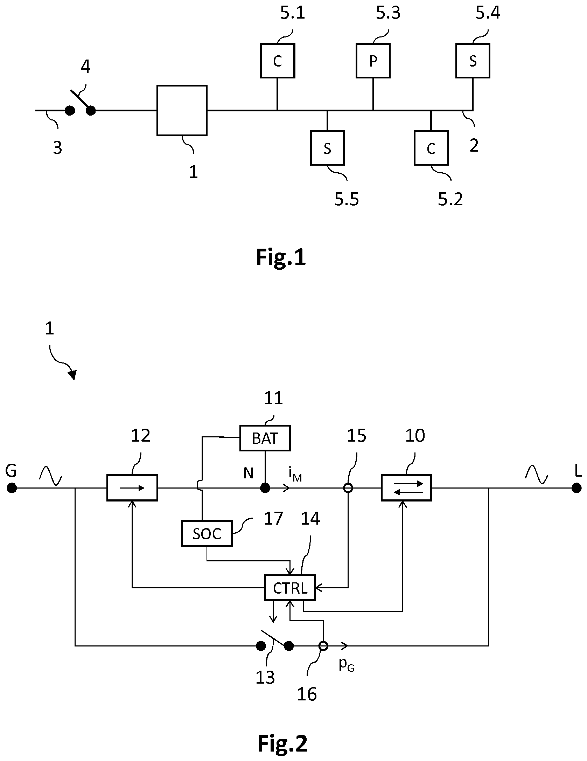

La figure 1 illustre de façon schématique le contexte applicatif de la présente invention. Ainsi, un dispositif d'interfaçage 1 est placé entre un réseau électrique local 2 et un réseau électrique général 3. Un dispositif d'isolation 4, par exemple un disjoncteur pilotable ou un contacteur, est placé entre le réseau électrique général 3 et le dispositif d'interfaçage 1. Des équipements électriques 5 sont reliés au réseau électrique local 2. Les équipements électriques 5 peuvent être de différentes natures, que nous classerons par la suite en producteur / consommateur / service. Un équipement électrique est considéré comme producteur P, quand il injecte de l'énergie électrique sur le réseau local 2, par exemple un système incluant un panneau photovoltaïque et un onduleur. Un équipement électrique est considéré comme consommateur C, quand il soutire de l'énergie sur le réseau local 2, par exemple une machine à laver, un ventilateur ou une borne de recharge de véhicule électrique. Un équipement électrique est considéré comme en mode service S, quand il peut injecter ou soutirer de l'énergie du réseau local 2.

La nature d'un équipement électrique peut être constante et ne pas changer au cours du temps, par exemple un système onduleur / panneau photovoltaïque directement relié au réseau (toujours « P ») ou encore un lampadaire (toujours « C »).

Pour d'autres équipements électriques, leur nature peut varier au cours du temps. Ce sera par exemple le cas d'une borne électrique d'alimentation d'une voiture qui pourra être en mode consommateur C quand la batterie interne de la voiture nécessite d'être rechargée (en vue d'un futur départ par exemple), en mode producteur P ou service S quand la voiture est stationnée pour une longue durée et que la borne d'alimentation est adaptée à récupérer de l'énergie de la batterie du véhicule pour la réinjecter sur le réseau local. Le mode producteur P sera choisi par la borne d'alimentation quand la borne souhaite uniquement décharger la batterie du véhicule (par exemple pour diminuer son état de charge quand la température augmente). Le mode service S sera choisi quand la batterie du véhicule peut indifféremment être rechargée ou déchargée ; elle fonctionne alors en soutien du réseau local.

En outre, par souci de simplicité de l'exposé, nous avons désigné les éléments reliés au réseau local par « équipements électriques ». Néanmoins, ces équipements électriques peuvent en pratique correspondre à des équipements électroniques de petite taille (ordinateurs, téléphone...) ou au contraire à des dispositifs électriques de grande taille, tels que des véhicules (voiture, bateau, camping-car...) ou encore un parc de batteries stationnaires.

De plus, le réseau électrique local peut correspondre à différents types de réseaux. C'est par exemple un réseau électrique interne d'une maison ou un réseau de quartier reliant des maisons entre elles. Le réseau électrique local peut être celui d'une station de recharge de véhicules, type voitures, relié par exemple à des panneaux solaires placés sur une ombrière.

Le réseau électrique local peut également faire partie d'un port et correspondre au réseau électrique d'un quai d'accueil, reliant un ensemble de bornes d'alimentation destinées à être reliées à des bateaux. Les équipements électriques considérés correspondent par exemple à une partie des équipements électriques internes d'un bateau, notamment un chargeur relié à une batterie et éventuellement un onduleur pouvant injecter de l'énergie sur le réseau à partir de cette batterie. Dans le cas d'un bateau, la batterie peut éventuellement être rechargée par une source de production interne du bateau électrique, par exemple un panneau photovoltaïque. Dans ce cas, le bateau pourra par exemple être en mode producteur P quand la batterie est rechargée et qu'il serait souhaitable de pouvoir « écouler » la production du panneau photovoltaïque. Le bateau pourra être en mode service S quand le bateau est non occupé et que sa batterie peut dès lors être utilisée en soutien du réseau électrique local.

Sur la figure 1, nous avons donc représenté schématiquement deux équipements électriques consommateurs C 5.1 et 5.2, un équipement producteur P 5.3 et deux équipements électriques en mode service S 5.4 et 5.5.

De façon générale, la mise en œuvre du procédé de gestion d'un réseau local selon la présente invention vise à organiser et privilégier les échanges d'énergie en local, c'est-à-dire entre équipements électriques reliés au réseau local. Cela sera possible en pratique s'il y a au moins un producteur et au moins un consommateur à un moment donné. Dans le cas où, à un moment donné, l'équilibre entre la demande et l'offre d'énergie ne peut être trouvé sur une période donnée, alors le dispositif d'interfaçage 1 va permettre de pallier au déficit de production/consommation sur le réseau local 2 en sollicitant le réseau électrique général 3.

La figure 2 illustre un dispositif d'interfaçage selon un mode de réalisation de la présente invention. Le dispositif d'interfaçage est placé entre une borne de connexion générale G destinée à être reliée au réseau électrique général et une borne de connexion locale L destinée à être reliée au réseau électrique local. Le dispositif d'interfaçage comprend un onduleur maître bidirectionnel 10, une batterie BAT 11 et un chargeur 12. L'onduleur maître bidirectionnel 10 est relié en sortie à la borne de connexion locale L et relié en entrée à un nœud de connexion N. Le chargeur 12 est relié en entrée à la borne de connexion générale G et en sortie au nœud N. La batterie BAT 11 est reliée au nœud N. Le dispositif d'interfaçage comprend en outre un interrupteur principal 13 relié d'une part à la borne de connexion générale G et d'autre part à la borne de connexion électrique locale L. Un dispositif de commande 14 pilote l'onduleur maître bidirectionnel 10, le chargeur 12 et l'interrupteur 13. Le dispositif de commande 14 reçoit des informations de courant données par des sondes 15 et 16, ainsi qu'une information d'état de charge de la batterie fournie par un dispositif d'analyse SOC 17. La sonde 15 mesure le courant I_{M} rentrant dans l'onduleur maître bidirectionnel 10. La sonde 16 mesure la puissance p_{G} traversant l'interrupteur 13 (I_{G} positif quand l'énergie circule du réseau général vers le réseau local).

Les signaux électriques présents sur les réseaux électriques général et local sont de type alternatif, et correspondent par exemple à une tension alternative 230 V. La tension présente sur le nœud N et les connexions reliées à ce nœud et respectivement à la batterie BAT 11, l'onduleur 10 et le chargeur 12, est une tension sensiblement continue DC dont la valeur dépend principalement de la batterie BAT 11.

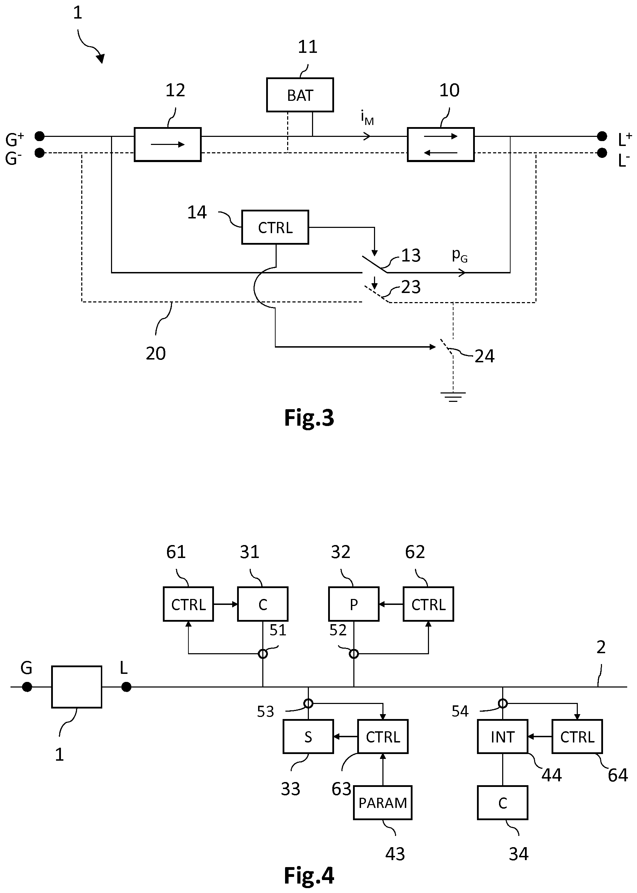

La figure 3 reprend les éléments principaux de la figure 2 et détaille les connexions électriques entre les différents éléments. Par souci de simplicité, seule une connexion électrique, par exemple le fil de phase pour un signal alternatif et une tension positive pour un signal continu, a été représentée. En pratique, il est bien entendu nécessaire d'avoir une deuxième connexion électrique, par exemple le neutre pour un signal alternatif et une tension nulle, ou connexion de terre, pour un signal continu. Ainsi la figure 3 illustre ces deuxièmes connexions électriques (neutre, terre) par des traits en pointillés. Ainsi, les bornes de connexion générale et locale sont en fait constituées chacune de deux bornes, des bornes générales positive G+ et négative G-, ainsi que des bornes locales positive L+ et négative L-, les bornes positives G+ et L+ correspondant aux bornes représentées en figure 2. Les connexions électriques « positives » représentées en trait plein en figure 2 sont en pratique chacune doublées d'une connexion électrique « négative » représentée en traits pointillés. En outre, un second interrupteur principal 23 est relié d'une part à la borne de connexion générale négative G- et d'autre part à la borne de connexion électrique locale négative L-, cet interrupteur 23 étant fermé ou ouvert comme l'interrupteur 13. De plus, un interrupteur 24 est placé entre la borne de connexion électrique locale négative L et une terre. L'interrupteur 24 est commandé par le dispositif de commande 14, de sorte qu'il soit fermé quand l'interrupteur principal 23 est ouvert et inversement.

Le dispositif de commande 14 peut inclure un dispositif de type synchrocoupleur permettant d'assurer la fermeture et l'ouverture des interrupteurs 13/23 (et 24) lorsque les signaux électriques présents sur le réseau général et le réseau local sont à une même valeur (par exemple lors d'un passage par un zéro de tension). En outre, le dispositif de commande 14 synchronise les opérations de fermeture/ouverture des interrupteurs 13/23/24 avec les commandes d'arrêt/mise en marche de l'onduleur maître 10.

Dans la suite de la description, le réseau de connexion électrique négatif ne sera pas rappelé, par souci de clarté de l'exposé et seules les connexions positives seront détaillées et explicitées. L'homme de l'art pourra aisément reconstituer les connexions électriques négatives associées.

Comme cela ressort des figures 2 et 3, le dispositif d'interfaçage comprend un raccordement direct entre les bornes G et L, par l'intermédiaire de l'interrupteur 13 et comprend un raccordement indirect entre les bornes G et L, par l'intermédiaire du chargeur 12 en série avec l'onduleur maître bidirectionnel 10. L'un ou l'autre de ces raccordements sera actif à un moment donné selon que le dispositif d'interfaçage est dans un mode de raccordement direct ou indirect. On privilégiera le mode de raccordement indirect qui permet une gestion locale de l'énergie échangée entre les équipements électriques comme cela est décrit plus en détail infra.

De façon générale, lorsque le dispositif d'interfaçage fonctionne dans un mode de raccordement indirect, l'onduleur maître bidirectionnel 10 fournit la référence de tension/fréquence du signal électrique alternatif présent sur le réseau local L, avec l'aide de la batterie BAT. Le fonctionnement du système onduleur maître bidirectionnel 10 et batterie BAT correspond par exemple au fonctionnement classique d'un système similaire utilisé dans un réseau électrique isolé. Ainsi, l'onduleur maître bidirectionnel 10 peut fonctionner selon un premier mode de fonctionnement MOD 1 consistant à réguler la tension du réseau local L autour d'une valeur de consigne, par exemple 230V, en absorbant ou en délivrant de l'énergie au réseau, l'énergie étant injectée ou prélevée dans la batterie BAT 11. L'onduleur maître bidirectionnel 10 peut également fonctionner selon un second mode de fonctionnement MOD 2 consistant à moduler la fréquence du réseau local L autour d'une valeur nominale, par exemple 50Hz, en fonction de la valeur de l'énergie injectée ou prélevée sur le réseau local L. Ainsi, en mode MOD2, quand le courant i_{M} (valeur positive pour un courant entrant dans l'onduleur 10, depuis le nœud N) est positif, et que l'onduleur doit délivrer une énergie au réseau local L, l'onduleur maître 10 abaisse la fréquence du réseau local L. Inversement, quand le courant i_{M} est négatif, et que l'onduleur doit soutirer une énergie au réseau local L, l'onduleur maître 10 élève la fréquence du réseau local L.

Le fonctionnement de l'onduleur maître bidirectionnel 10 en mode MOD2, modulation de la fréquence, permet une gestion locale du réseau électrique L en sollicitant plus ou moins les équipements producteurs P, service S ou consommateurs C de sorte que la demande en énergie soit sensiblement égale à la fourniture d'énergie. Pour ce faire, il est nécessaire que les équipements producteurs, service ou consommateurs puissent faire varier l'énergie injectée ou soutirée sur le réseau local L en fonction de la fréquence du réseau local L. Cet aspect sera décrit plus en détail ci-après, en relation à la figure 4. Autrement dit, le dispositif d'interfaçage et les équipements électriques forment ensemble une boucle de régulation de la consommation/production d'énergie par ces mêmes équipements électriques, par un effet synergique entre, d'une part, la modulation en fréquence assurée par l'onduleur 10 fonctionnant en mode maître, et d'autre part, l'ajustement de la consommation/production électrique par les équipements électriques en fonction de la fréquence du réseau local 2. Un éventuel flux d'énergie électrique entre la batterie 11 et les équipements électriques, à travers l'onduleur maître 10, permet de suppléer un éventuel léger déséquilibre instantanée entre la consommation et la production électriques des équipements électriques sur le réseau local 2, la batterie 11 prenant alternativement le rôle d'un producteur ou d'un consommateur pour équilibrer les énergies injectées et soutirées sur le réseau local 2, moyennant une constante de temps de la boucle de régulation. Aussi, lorsque l'onduleur 10 fonctionne en mode maître et en mode de modulation de la fréquence du réseau électrique local 2, et que le chargeur 12 est inactif, la demande en énergie est sensiblement égale à la fourniture d'énergie des équipements électriques si les équipements électriques sont en mesure d'ajuster leur consommation/production comme « demandé » par l'onduleur maître par le biais de la modulation de fréquence. Dans le cas où les équipements électriques ne sont pas en mesure d'ajuster suffisamment leur production/consommation, la batterie 11 va suppléer le léger déséquilibre pendant une période « d'assistance» donnée, laquelle est fonction de la capacité de la batterie 11 (en Ah), mais passé cette période, le système ne permet plus d'assurer « parfaitement » l'équilibre énergétique local sur le réseau électrique local 2. Autrement dit, on considère que la demande en énergie est sensiblement égale à la fourniture d'énergie des équipements électriques sur une période donnée si, au cours de cette période, la batterie 11 a délivré au réseau local 2, via l'onduleur 10, une quantité d'énergie environ égale à la quantité d'énergie qu'elle a reçu de sorte que les variations de la charge de la batterie sont inférieures, voire bien inférieure, à la capacité totale de la batterie (expliqué plus en détail plus loin).

Dans le cas, par exemple, où la demande énergétique est trop importante, il est possible de prolonger la période d'assistance de la batterie 11 en activant le chargeur 12. Le système électrique peut alors continuer à fonctionner en mode de régulation tant que le déséquilibre entre les énergies soutirées et produites par les équipements électriques ne dépasse pas l'énergie maximale que peut fournir le chargeur 12.

Quand l'énergie échangée en local s'équilibre, le système batterie BAT 11 et onduleur maître bidirectionnel 10 est auto-suffisant et permet une gestion, ou autrement dit « animation » des échanges d'énergie en local. Par contre, quand l'énergie échangée en local n'est plus équilibrée, dans un premier cas la batterie BAT 11 va se décharger en dessous d'une valeur d'état de charge limite inférieure (SOC 0) si l'énergie demandée par les consommateurs est plus élevée que celle délivrée par les producteurs, et dans un second cas la batterie BAT 11 va se charger au-dessus d'une valeur d'état de charge limite supérieure (SOC5) si l'énergie fournie par les producteurs est supérieure à l'énergie absorbée par les consommateurs.

Selon un aspect de la présente invention, dans le premier cas où la batterie BAT11 se décharge trop car la demande en énergie locale est forte, le chargeur 12 est sollicité pour soutenir la demande en énergie du réseau local L. Ainsi, le chargeur 12 prélève de l'énergie sur le réseau électrique général G pour alimenter le réseau local L, via l'onduleur maître bidirectionnel 10.

Ainsi, le chargeur 12 du raccordement indirect du dispositif d'interfaçage permet de pallier un faible état de charge de la batterie 11 en prélevant sur le réseau électrique général uniquement l'énergie indispensable aux besoins du réseau électrique local, tout en permettant une continuité de la gestion locale du réseau électrique L par l'onduleur maître bidirectionnel 10.

Un avantage du dispositif d'interfaçage selon la présente invention est donc qu'il permet, contrairement aux systèmes ilotés classiques, de maintenir une gestion locale, en favorisant l'échange d'énergie locale grâce à la modulation de fréquence de l'onduleur maître 10, tout en assurant une continuité de service grâce à la connexion au réseau électrique général, via le chargeur.

On notera que dans le cas présent, la batterie BAT 11 peut présenter une capacité bien plus faible que celle nécessaire classiquement dans une installation isolée, grâce à la présence du chargeur 12. En effet, ce chargeur 12 peut pallier rapidement à un manque d'énergie dans la batterie BAT et il n'est donc pas nécessaire que la batterie présente une capacité très élevée permettant de garantir une continuité de service comme cela est le cas des systèmes ilotés présentant notamment des sources de production intermittentes, telles que des panneaux photovoltaïques. Dans la présente invention, on ne vise pas 100% d'autonomie, mais 99% ou moins, et cela permet en pratique de décontraindre fortement le dimensionnement de la batterie BAT.

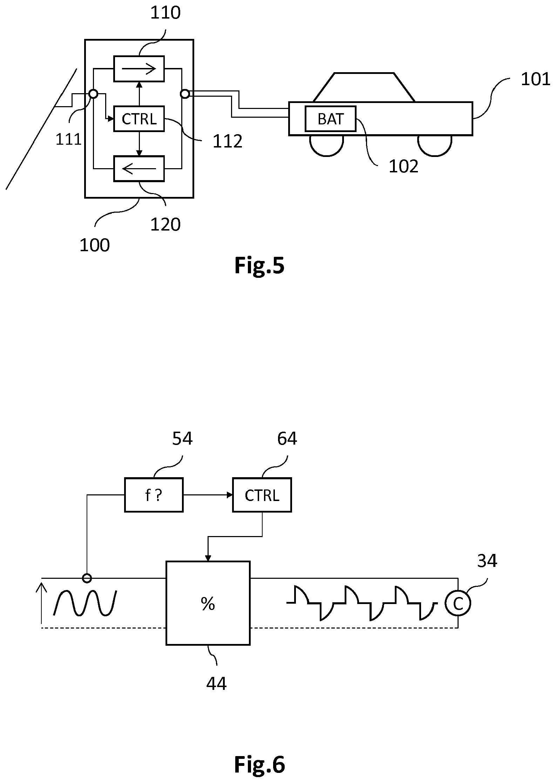

La figure 4 illustre un réseau local 2, par exemple un réseau domestique, auquel sont reliés des équipements électriques représentés par leur état présent, à savoir producteur P, consommateur C ou en service S. Le réseau local 2 est relié à un dispositif d'interfaçage selon la présente invention, par exemple tel que celui décrit précédemment. Dans cet exemple, un équipement 31 est toujours en mode consommateur C et correspond à un appareil susceptible de prélever une puissance variable en fonctionnement, par exemple deux ou trois niveaux de puissance correspondant à des modes de fonctionnement différents (par exemple un chargeur de batterie). Un équipement 32 est toujours en mode producteur P et correspond par exemple à une source d'énergie renouvelable, tel qu'un système onduleur / panneau photovoltaïque, susceptible de modifier la puissance injectée sur le réseau local 2. Un équipement 33 peut être dans l'un des 3 modes P, C ou S (représenté en mode S), le mode présent de l'équipement pouvant être paramétré par un dispositif de paramétrage 43 ; il s'agit par exemple d'une batterie ou d'une borne de recharge de véhicules telle que celle décrite ci-après en relation avec la figure 5. Un équipement 34 est toujours en mode C et correspond à un appareil résistif, c'est-à-dire présentant au réseau électrique 2 une impédance sensiblement équivalente à une résistance ; il s'agit par exemple d'une ampoule électrique, d'un grille-pain ou d'un chauffe-eau.

Chacun des équipements électriques susmentionnés 31, 32, 33 et 34 est associé à un dispositif de mesure de fréquence, respectivement 51, 52, 53 et 54 et un dispositif de contrôle 61, 62, 63 et 64 qui reçoit la mesure de fréquence et pilote le fonctionnement de l'équipement électrique associé en fonction de la fréquence présente du réseau local. Ainsi, quand le dispositif d'interfaçage 1 fait varier la fréquence du signal électrique du réseau local, car l'offre et la demande d'énergie sont déséquilibrées, les dispositifs de mesure détectent une variation de fréquence à la hausse ou à la baisse et les dispositifs de contrôle commandent les équipements électriques afin qu'ils ajustent leur injection ou leur soutirage d'énergie sur le réseau, de façon si possible à atteindre un équilibre entre l'offre et la demande d'énergie.

Dans le cas où l'équipement électrique n'est pas doté d'une fonction lui permettant de modifier lui-même son comportement, un dispositif d'interface peut être placé entre le réseau électrique local et l'équipement. C'est par exemple le cas de l'équipement 34 qui présente un comportement résistif et pour lequel un dispositif d'interface INT 44 est placé entre le réseau 2 et l'équipement 34. Un exemple d'interface INT 44 est décrit ci-après en relation avec la figure 6. La finalité d'un tel dispositif d'interface est de limiter la puissance transmise à l'équipement électrique, la puissance transmise est pilotée par le dispositif de contrôle associé (en fonction des variations de fréquence du réseau local). Vu du réseau électrique local, l'association de l'interface INT et de l'équipement électrique se comporte comme un équipement électrique susceptible de faire varier l'énergie prélevée en fonction de la fréquence du réseau.

La figure 5 illustre une borne de recharge 100 d'un véhicule électrique 101, incluant une batterie 102. La borne 100 est reliée au réseau électrique local 2 et correspond par exemple à l'équipement électrique 33 de la figure 4. La borne 100 comprend un chargeur 110 (apte à convertir le signal électrique alternatif sur le réseau local en signal électrique continu pour l'alimentation de la batterie 102 du véhicule) pouvant fonctionner selon plusieurs modes de fonctionnement pour lesquels la puissance prélevée sur le réseau local est différente, par exemple au moins deux modes avec une puissance élevée permettant une recharge rapide de la batterie 102 et une puissance faible permettant une recharge lente de la batterie 102. La borne comprend un dispositif de mesure de fréquence 111 pour mesurer la fréquence du réseau local 2 et comprend un dispositif de contrôle 112 recevant la mesure fournie par le dispositif de mesure 111 et apte à piloter le chargeur 110 afin d'adapter son mode de fonctionnement aux conditions présentes du réseau. Ainsi, dans un mode de fonctionnement « simple » du dispositif de contrôle, si la fréquence du réseau est basse (trop de consommateurs), le dispositif de contrôle 112 commande un passage dans un mode de plus faible puissance et inversement. Dans un mode de fonctionnement « perfectionné », le dispositif de contrôle peut mettre en œuvre un algorithme de pilotage plus complexe, tenant compte d'autres paramètres tels que l'utilisation prévue de la voiture ; le dispositif de contrôle pouvant dès lors être paramétré pour faire varier son algorithme de pilotage dans le temps en fonction des valeurs de paramètres autres que la fréquence du réseau local. Un dispositif de paramétrage peut ainsi être prévu pour faire varier les valeurs de paramètres pris en compte par le dispositif de contrôle. A titre d'exemple, on pourra par exemple prévoir de tenir compte des paramètres suivants : utilisation future prévue (départ imminent ou lointain) ; niveau de charge de la batterie... Le dispositif de paramétrage peut inclure une IHM permettant à l'utilisateur de la voiture d'indiquer son souhait d'utilisation, et/ou peut inclure des moyens de réception de valeurs de mesures telles que la valeur de l'état de charge de la batterie 102.

Ainsi, si la batterie est faiblement chargée et si l'utilisateur doit partir rapidement, le dispositif de contrôle peut maintenir une forte demande d'énergie même si la fréquence du réseau local diminue. Dans ce cas, le dispositif d'interfaçage pourra solliciter le réseau électrique général si le réseau local ne parvient pas à augmenter la fourniture d'énergie par des producteurs locaux. Cette sollicitation du réseau général se fera le plus longtemps possible via le raccordement indirect (avec le chargeur 12) pour maintenir une sollicitation locale des producteurs d'énergie. Dans le cas où le raccordement indirect ne parvient pas à fournir l'énergie nécessaire (au-delà de la puissance maximale du chargeur 12), le dispositif d'interfaçage va activer le raccordement direct en fermant l'interrupteur principal 13.

Dans le cas inverse où l'utilisateur n'a pas prévu de départ imminent, le dispositif de contrôle 112 peut avantageusement modifier la puissance prélevée sur le réseau local pour contribuer à l'équilibre du réseau local, c'est-à-dire à l'équilibre local de l'offre et de la demande d'énergie entre équipements électriques reliés au réseau local.

En outre, la borne 100 peut inclure un onduleur 120 apte à convertir le signal électrique continu provenant de la batterie 102 en un signal alternatif pouvant être injecté sur le réseau local. L'onduleur 120 est un onduleur « esclave » qui n'impose pas la fréquence/tension mais se contente d'injecter du courant en phase avec le signal électrique présent sur le réseau local. L'onduleur peut être prévu pour injecter plus ou moins de courant sur le réseau, variation d'injection continue, ou fonctionner par exemple selon plusieurs modes d'injections présentant des valeurs différentes, discrètes, de courants injectés. Le dispositif de contrôle peut dès lors piloter l'onduleur pour qu'il injecte ou non du courant, et dans le premier cas en déterminant le niveau de courant injecté en fonction des besoins du réseau local. Comme pour le chargeur 110, le dispositif de contrôle peut tenir compte d'autres paramètres (que la fréquence du réseau local) pour piloter l'onduleur. De façon générale, l'utilisateur pourra paramétrer le dispositif de contrôle en lui indiquant s'il est d'accord pour donner de l'énergie au réseau électrique. Ainsi, la borne 100 pourra être considérée à un moment donné comme consommateur uniquement C si l'utilisateur ne souhaite pas que de l'énergie soit prélevée sur sa batterie, ou pourra être considérée comme en mode service S s'il est possible de prélever ou d'injecter du courant dans la batterie 102 et pourra éventuellement être considérée comme producteur si l'utilisateur souhaite uniquement décharger sa batterie (par exemple dans le cas où la température est élevée et qu'il est souhaitable de diminuer la charge de la batterie pour éviter son vieillissement prématuré).

La figure 6 illustre un mode de réalisation d'un dispositif d'interface INT 44 représenté en figure 4. Ce dispositif d'interface 44 est dans cet exemple un gradateur, dispositif connu, qui transforme un signal alternatif sinusoïdal en un signal alternatif « rogné », comme cela apparaît sur la représentation du signal en figure 6. L'énergie véhiculée par le signal rogné et transmise à l'équipement électrique consommateur 34 est plus faible que celle qui aurait été transmise en direct, sans le gradateur. Le gradateur peut rogner plus ou moins le signal alternatif d'entrée et faire varier ainsi la puissance consommée par l'équipement 34 en fonction d'un signal de commande reçu par le dispositif de contrôle 64 recevant une information de fréquence fournie par le dispositif de mesure de fréquence 54.

De façon générale, les équipements électriques reliés au réseau local et susceptible d'interagir avec un dispositif d'interfaçage selon la présente invention, peuvent présenter un dispositif de contrôle appliquant une loi de commande fixe ou paramétrable. La loi de commande (par exemple puissance délivrée/soutirée en fonction de la fréquence du réseau local) peut être adaptée à chaque type d'appareil en tenant compte de différents éléments de contexte, par exemple une notion de priorité de service entre les équipements électriques. En outre, la loi de commande d'un appareil électrique pourra être variable temporellement, et disposer par exemple de deux lois utilisées sur deux périodes distinctes de la journée (jour/nuit). Afin de tendre vers l'équilibre de l'offre et de la demande la majorité du temps, un mécanisme de sollicitation et/ou d'arbitrage peut être utilisé pour définir les lois de commande qui seront mises en œuvre par les dispositifs de contrôle associés aux équipements électriques. On notera néanmoins, qu'il n'est pas indispensable que l'équilibre soit atteint en permanence, voire même sur de plus longues périodes, dans la mesure où le dispositif d'interfaçage selon la présente invention permet de suppléer à un manque ou un surplus d'énergie dans le réseau local. Un avantage du dispositif d'interfaçage selon la présente invention est donc qu'il n'est pas nécessaire de mettre en œuvre un mécanisme de contrôle centralisé qui régule à tout instant la demande et l'offre d'énergie. Au contraire, un réseau local relié à un dispositif d'interfaçage selon la présente invention et disposant d'équipements électriques contrôlables par un dispositif de contrôle permet d'envisager une multitude de scénarii de fonctionnement, laissant ainsi une grande souplesse d'utilisation, de la plus simple (équipements électriques basiques avec des dispositifs de contrôle fixés, simples) à la plus complexe (équipements électriques complexes, dont le paramétrage en C, P ou S peut être implémenté en faisant appel à des outils de programmation pouvant par exemple inclure un service de transaction par internet ou tout autre outil, interface logicielle).

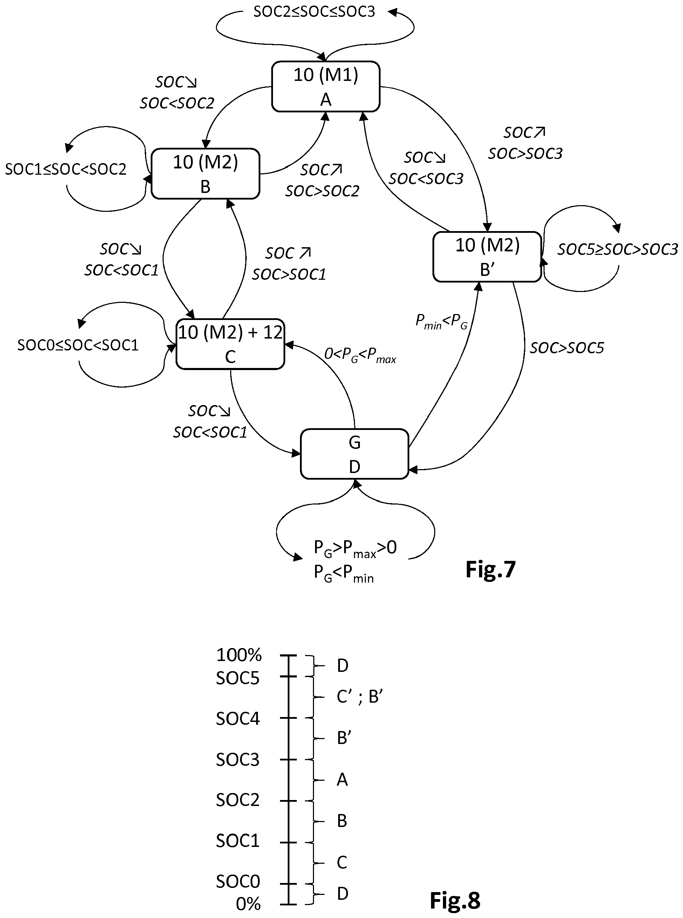

Les figures 7 et 8 permettent d'illustrer plus en détail le procédé de fonctionnement du dispositif d'interfaçage, et notamment le procédé de commande mis en œuvre par le dispositif de commande 14. Le procédé de commande est illustré à l'aide d'un diagramme d'états, le dispositif d'interfaçage étant à un moment donné dans un état donné parmi plusieurs états possibles (A, B, C, D, B' ou C'). La figure 8 illustre une grille de niveaux d'états de charge compris entre 0% et 100%, 6 niveaux d'états de charge étant indiqués, de SOCO à SOC5. Entre deux niveaux d'états de charge référencés, le dispositif d'interfaçage est dans un état donné parmi les états possibles.

Le procédé de contrôle est décrit en partant d'un état A du dispositif d'interfaçage correspondant à un état d'équilibre « naturel » du réseau local L, puis en décrivant les passages à des états (B, C puis D) ou (B' puis D) rencontrés successivement quand le dispositif d'interfaçage a de plus en plus de difficultés à assurer un équilibre du réseau local par manque respectivement de producteurs locaux ou de consommateurs locaux et que l'état de charge de la batterie BAT 11 respectivement diminue ou augmente.

Dans l'état A, l'état de charge de la batterie BAT 11 est situé dans une plage milieu située entre les niveaux SOC2 et SOC3. L'onduleur maître 10 est en mode 1, c'est-à-dire qu'il réalise une régulation de la tension du réseau local. L'interrupteur général 13 (et 23) est ouvert. Le chargeur 12 est inactif. Seule l'association onduleur maître 10 et batterie BAT11 est active.

Le dispositif d'interfaçage reste dans l'état A tant que l'état de charge est situé entre les niveaux SOC2 et SOC3. Quand l'état de charge de la batterie BAT 11 diminue et descend en dessous du niveau SOC2, le dispositif d'interfaçage passe dans l'état B. Quand l'état de charge de la batterie BAT 11 augmente et passe au-dessus du niveau SOC3, le dispositif d'interfaçage passe dans l'état B'.

Dans l'état B, l'état de charge de la batterie BAT 11 est situé dans une plage située entre les niveaux SOC1 et SOC2. L'onduleur maître 10 est en mode 2, c'est-à-dire qu'il réalise une modulation de la fréquence du réseau local afin de solliciter les équipements électriques connectés au réseau local pour qu'ils fournissent/ou produisent plus ou moins selon la variation de la fréquence du signal présent sur le réseau local. L'interrupteur général 13 (et 23) est ouvert. Le chargeur 12 est inactif. Seule l'association onduleur maître 10 et batterie BAT11 est active.

Le dispositif d'interfaçage reste dans l'état B tant que l'état de charge est situé entre les niveaux SOC1 et SOC2. Si l'état de charge de la batterie BAT 11 remonte, et passe au-dessus du niveau SOC2, le dispositif d'interfaçage passe dans l'état A décrit précédemment. Quand l'état de charge de la batterie BAT 11 diminue et descend en dessous du niveau SOC1, le dispositif d'interfaçage passe dans l'état C.

Dans l'état C, l'état de charge de la batterie BAT 11 est situé dans une plage située entre les niveaux SOCO et SOC1. L'onduleur maître 10 est en mode 2, et il réalise une modulation de la fréquence du réseau local L. L'interrupteur général 13 (et 23) est ouvert. Le chargeur 12 est ici rendu actif et le dispositif de commande 14 commande le chargeur de manière à ce qu'il fournisse un courant sensiblement égal au courant i_{M} fourni par l'onduleur 10 au réseau local L, la commande du chargeur étant par exemple asservi sur la mesure du courant i_{M}. Le chargeur 12 est sollicité uniquement pour fournir du courant au réseau local. Quand, pendant l'opération de modulation de fréquence, l'onduleur maître 10 prélève de l'énergie sur le réseau local L, cette énergie est injectée dans la batterie BAT 11 pour la recharger.

Le dispositif d'interfaçage reste dans l'état C tant que l'état de charge est situé entre les niveaux SOCO et SOC1. Si l'état de charge de la batterie BAT 11 remonte, et passe au-dessus du niveau SOC1, le dispositif d'interfaçage passe dans l'état B décrit précédemment. Quand l'état de charge de la batterie BAT 11 diminue et descend en dessous du niveau SOC0, le dispositif d'interfaçage passe dans l'état D.

Dans l'état D, l'état de charge de la batterie BAT 11 est situé dans une plage située entre les niveaux 0% et SOCO (ou éventuellement supérieur, comme cela est décrit plus en détail ci-après). Le mode de raccordement direct est activé, c'est-à-dire que L'interrupteur général 13 (et 23) est fermé. Dès lors, l'onduleur maître 10 est inactif (en tout cas, il ne se comporte plus comme un onduleur maître) et c'est le réseau général qui alimente directement le réseau local. Le chargeur 12 est inactif.

Le dispositif d'interfaçage reste dans l'état D tant que la puissance demandée par le réseau local, la puissance p_{G}, positive, est supérieure à un niveau de puissance pmax correspondant à la puissance maximale que le chargeur 12 est capable de fournir à l'onduleur maître 10. Si la puissance p_{G} diminue (tout en restant positive) et devient inférieure à pmax, le dispositif d'interfaçage passe dans l'état C décrit précédemment.

Dans l'état B', l'état de charge de la batterie BAT 11 est situé dans une plage située entre les niveaux SOC3 et SOC4. L'onduleur maître 10 est en mode 2, c'est-à-dire qu'il réalise une modulation de la fréquence du réseau local afin de solliciter les équipements électriques connectés au réseau local pour qu'ils fournissent/ou produisent plus ou moins selon la variation de la fréquence du signal présent sur le réseau local. L'interrupteur général 13 (et 23) est ouvert. Le chargeur 12 est inactif. Seule l'association onduleur maître 10 et batterie BAT11 est active.

Le dispositif d'interfaçage reste dans l'état B' tant que l'état de charge est situé entre les niveaux SOC3 et SOC5. Si l'état de charge de la batterie BAT 11 diminue, et passe en dessous du niveau SOC3, le dispositif d'interfaçage passe dans l'état A décrit précédemment. Quand l'état de charge de la batterie BAT 11 augmente et passe au-dessus du niveau SOC5, le dispositif d'interfaçage passe dans l'état D.

Le dispositif d'interfaçage reste dans l'état D tant que la puissance fournie par le réseau local, la puissance p_{G}, négative, est inférieure à un niveau de puissance pmin correspondant par exemple à une puissance nulle, pmin=0. Si la puissance p_{G} augmente et devient supérieure à pmin, le dispositif d'interfaçage passe dans l'état B' décrit précédemment.

Par souci de simplification de l'exposé, les valeurs d'état de charge SOCO à SOC5 utilisées pour déclencher les changements d'état ont été présentées comme identiques pour passer d'un état à un autre et inversement. Néanmoins, pour éviter des problèmes d'oscillation entre les états, on pourra prévoir d'utiliser des seuils différents pour passer d'un état à un autre ou inversement, en prévoyant par exemple une valeur SOC1 inférieure à une valeur correspondante SOC1' respectivement utilisées pour le maintien dans l'état B ou l'état C.

On notera qu'il est courant que l'évaluation de l'état de charge SOC soit réalisée par mesure de la tension aux bornes de la batterie BAT. Néanmoins, pour un même état de charge, la tension mesurée peut varier en fonction du courant entrant ou sortant de la batterie. En outre, la tension mesurée peut varier en fonction d'autres paramètres, telle que la température. Ainsi, lorsque l'évaluation de l'état de charge est réalisée de façon approximée par mesure uniquement de la tension, il pourra être nécessaire de prévoir des valeurs de seuil SOCi et SOCi* significativement différentes pour éviter le problème d'oscillations susmentionné.

En outre, dans le cas où les conditions de changement d'état considèrent une valeur de puissance, notamment la puissance p_{G}, il pourra être intéressant de considérer une moyenne glissante sur une fenêtre temporelle, afin de s'assurer que la variation de puissance est significative et permet réellement un changement d'état, sans entraîner de phénomènes oscillatoires.

En outre, pour éviter des oscillations entre le mode D et le mode C dont les changements d'état sont décidés sur des valeurs de paramètres différents, SOC ou courant p_{G}, on pourra envisager d'utiliser le chargeur 12 pour recharger un peu la batterie BAT 11 jusqu'à un niveau SOC0' supérieur au niveau SOCO juste après un changement d'état C vers D. En outre, dans ce cas, il est possible d'ajouter une condition pour le passage de l'état D à l'état C, en demandant que le SOC batterie BAT 11 soit supérieur à SOC0'.

De la même façon, pour éviter des oscillations entre le mode D et B', on pourra envisager de décharger la batterie BAT 11 jusqu'à un niveau SOC5' inférieur à SOC5 juste après un changement d'état B' vers D. En outre, dans ce cas, il est possible d'ajouter une condition pour le passage de l'état D à l'état B', en demandant que le SOC batterie BAT 11 soit inférieur à SOC5'. Pour réaliser une telle décharge de la batterie BAT de façon active (et non uniquement par l'auto-décharge lente de la batterie), on pourra envisager d'utiliser l'onduleur 10 en mode esclave pour transférer de l'énergie de la batterie BAT vers le réseau local. L'onduleur 10 n'étant plus maître lorsque l'interrupteur 13 est fermé et que l'on est passé dans l'état D, il est indispensable qu'il fonctionne dans ce cas en mode esclave. On notera néanmoins, qu'il n'est pas forcément avantageux de prévoir un onduleur 10 qui puisse fonctionner en mode esclave lorsque le réseau général alimente directement le réseau local, car dans ce cas il est nécessaire que l'onduleur dispose de dispositifs de protection spécifiques tels qu'un dispositif de coupure automatique en cas de perte de tension (coupure du réseau général). Autrement dit, il peut être avantageux d'un point de vue économique notamment, de prévoir un autre moyen de décharge de la batterie si on souhaite pouvoir réaliser une telle décharge, afin de pouvoir utiliser un onduleur bidirectionnel maître 10 qui soit « simplifié », c'est-à-dire prévu pour fonctionner sur un site isolé en tant que maître uniquement.

Un autre moyen d'éviter un éventuel problème d'oscillations, est de prévoir une condition de passage de l'état D à l'état B' qui corresponde à un véritable changement de sens de transfert de puissance pG. Plus précisément, quand le dispositif d'interfaçage est dans l'état D avec une puissance pG négative (c'est-à-dire un transfert d'énergie du réseau local vers le réseau général), on pourra autoriser un passage vers l'état B' uniquement si la puissance pG devient positive (transfert d'énergie du réseau général vers le réseau local). En outre, on pourra utiliser une moyenne glissante sur une fenêtre temporelle, afin de s'assurer que le changement de sens n'est pas momentané, mais correspond à une vraie tendance, et permet réellement un changement d'état, sans entraîner de phénomènes oscillatoires.

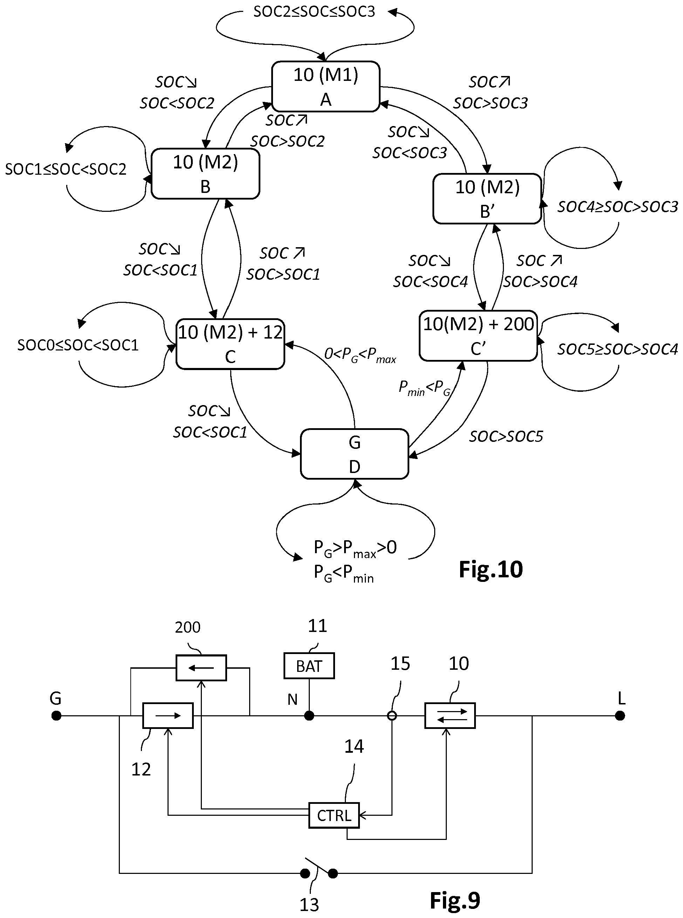

La figure 9 illustre une variante de réalisation d'un dispositif d'interfaçage comprenant les éléments précédemment décrits en relation aux figures 2 et 3 et comprenant en outre un onduleur esclave 200 dont une entrée est reliée au nœud N et dont une sortie est reliée à la borne générale G, l'onduleur esclave 200 étant ainsi en parallèle avec le chargeur 12. L'onduleur esclave 200 est commandé par le dispositif de commande 14. L'onduleur esclave 200 est utilisé quand le réseau local fournit une énergie excédentaire (la production est supérieure à la consommation locale d'énergie), et permet une « évacuation » de la production vers le réseau général G. L'onduleur 200 va donc être activé quand l'état de charge de la batterie est plutôt élevé et va permettre de maintenir l'onduleur maître actif pour maintenir une gestion locale de l'énergie, sans qu'il ne soit nécessaire de passer en mode de raccordement direct tant que l'onduleur 200 peut transférer le surplus de production locale vers le réseau général G.

La figure 10 illustre une variante de mise en œuvre du procédé de commande réalisé par le dispositif de commande 14, pour un dispositif d'interfaçage tel que celui illustré en figure 9. Le procédé comprend l'ensemble des états décrits en relation à la figure 7 et comprend en outre un état C', inséré entre les états B' et D. Les modifications portent sur les conditions de maintien dans l'état B' et sur les conditions de passage entre les états B' et C'.

Le dispositif d'interfaçage reste dans l'état B' tant que l'état de charge est situé entre les niveaux SOC3 et SOC4. Quand l'état de charge de la batterie BAT 11 augmente et passe au-dessus du niveau SOC4, le dispositif d'interfaçage passe dans l'état C'.

Dans l'état C', l'état de charge de la batterie BAT 11 est situé dans une plage située entre les niveaux SOC4 et SOC5. L'onduleur maître 10 est en mode 2, et il réalise une modulation de la fréquence du réseau local L. L'interrupteur général 13 (et 23) est ouvert. L'onduleur esclave 200 est ici rendu actif et le dispositif de commande 14 commande l'onduleur esclave 200 de manière à ce qu'il absorbe un courant sensiblement égal au courant i_{M} fourni par l'onduleur maître 10 et correspond à de l'énergie reçue du réseau local L, la commande de l'onduleur esclave 200 étant par exemple asservi sur la mesure du courant i_{M}. L'onduleur esclave 200 est sollicité uniquement pour pouvoir prélever de l'énergie au réseau local. Quand, pendant l'opération de modulation de fréquence, une énergie est injectée dans le réseau local L par l'onduleur maître 10, cette énergie est prélevée de la batterie BAT 11 pour la décharger.

Selon une variante de réalisation du dispositif d'interfaçage représenté en figure 9, le dispositif d'interfaçage comprend uniquement un onduleur 200 placé entre le nœud N et la borne générale G, et il n'y a pas de chargeur 12 en parallèle. Dans ce cas de figure, le dispositif d'interfaçage permet uniquement de réinjecter sur le réseau général un surplus d'énergie du réseau local.

Les procédés de commande décrits ci-dessus sont des exemples de procédés pouvant être mis en œuvre par le dispositif de commande 14 d'un dispositif d'interfaçage selon la présente invention. L'homme de l'art pourra imaginer d'autres procédés de commande ainsi que des variantes de ceux présentés.

En outre, les exemples de dispositifs d'interfaçage décrits précédemment comprennent tous un raccordement direct, via les interrupteurs 13,23. Il est néanmoins possible de ne pas prévoir de raccordement direct. Dans ce cas, la puissance pouvant être prélevée sur le réseau sera en pratique limitée à la puissance maximale pouvant être fournie par le chargeur 12. De même, la puissance pouvant être réinjectée sur le réseau sera en pratique limitée à la puissance maximale pouvant être prélevée par l'onduleur esclave 200.

L'homme de l'art pourra imaginer d'autres modes de réalisation d'un dispositif d'interfaçage selon la présente invention, les exemples susmentionnés n'étant pas limitatifs._Par exemple, le dispositif de contrôle pourra se baser sur d'autres paramètres de mesure que le courant i_{M} ou la puissance p_{G}, et utiliser par exemple la puissance de sortie de l'onduleur 10 côté réseau local, pour déterminer les signaux de commande à appliquer aux différents éléments du chargeur 12, du synchrocoupleur, des onduleurs et des interrupteurs 13, 23, 24._De même, il est possible d'utiliser un autre critère que l'état de charge de la batterie pour définir la loi de commande du dispositif de commande du dispositif d'interfaçage, en considérant par exemple les flux d'énergie et/ou les niveaux de puissance instantanés et/ou les niveaux de puissance maximale délivrable ou absorbable par la batterie.

En outre, il est possible de mettre en cascade des dispositifs d'interfaçage pour relier un réseau principal à un premier réseau local, puis relier ce premier réseau local à un second réseau local, pour réaliser une « arborescence » de réseaux avec des animations d'échanges d'énergie à chaque niveau d'arborescence. Ainsi, le premier réseau local serait animé par un premier dispositif d'interfaçage placé entre le réseau général et le premier réseau local et un équipement électrique particulier de ce premier réseau local comprendrait un second dispositif d'interfaçage qui serait ainsi placé entre les premier et second réseaux locaux. Ainsi, le système électrique peut comporter un réseau électrique local 2, auquel est relié, ou sont reliés, un ou plusieurs réseaux électriques secondaires 2.2, 2.3... distincts les uns des autres. Chaque réseau électrique secondaire peut être relié au réseau électrique local 2 par un dispositif d'interfaçage identique ou similaire à celui décrit précédemment, par exemple en référence à la fig.2. Chaque réseau électrique secondaire est relié à des équipements électriques secondaires, dont au moins un équipement consommateur et un équipement producteur, dont au moins l'un des deux est apte à modifier sa puissance électrique consommée ou injectée sur le réseau secondaire en question, en fonction de la fréquence de ce réseau secondaire. On obtient ainsi un système électrique pouvant comporter plusieurs réseaux locaux secondaires, agencés en étoile à partir du réseau électrique local 2, dont chaque dispositif d'interfaçage secondaire est ainsi adapté à assurer une gestion locale des équipements électriques secondaires du réseau secondaire concerné.

Ce second dispositif d'interfaçage comprendrait par exemple un dispositif de mesure de la fréquence du premier réseau local et le dispositif de commande 14 tiendrait compte de cette mesure de fréquence pour commander l'onduleur bidirectionnel maître 10, le chargeur 12 et éventuellement l'onduleur esclave 200. Ainsi, vu du réseau local secondaire, le second dispositif d'interfaçage se comporterait comme un Producteur ou un Consommateur selon que le premier réseau a besoin d'augmenter respectivement la consommation ou la production d'énergie sur le premier réseau local.

## Revendications

1. Système électrique comportant :
o un réseau électrique local (2) ;
o au moins un équipement électrique consommateur (31), et au moins un équipement électrique producteur (32), reliés au réseau électrique local (2) ;
o un dispositif d'interfaçage (1) destiné à relier le réseau électrique local (2) à un réseau électrique général (3), comportant :
• une borne de connexion générale (G) destinée à être reliée au réseau électrique général (3), et une borne de connexion locale (L) reliée au réseau électrique local (2) ;
• une batterie (11) ;
• un dispositif onduleur bidirectionnel (10) pouvant fonctionner en mode maître, dont une sortie est reliée à ladite borne de connexion locale (L) et une entrée est reliée à ladite batterie (11), le dispositif onduleur (10) étant apte à fonctionner dans un mode de modulation de fréquence dans lequel la fréquence d'un signal de sortie délivré sur sa sortie est variable en fonction d'une puissance échangée entre le dispositif onduleur bidirectionnel (10) et ledit réseau électrique local (2) ;
• un dispositif chargeur (12), dont une entrée est reliée à ladite borne de connexion générale (G) et une sortie reliée à ladite entrée du dispositif onduleur (10) ;
• un dispositif de commande (14) apte à commander la mise en route du dispositif chargeur (12) quand le dispositif onduleur bidirectionnel (10) fonctionne dans ledit mode de régulation de fréquence et qu'un besoin de faire transiter de l'énergie du réseau électrique général vers le réseau électrique local (2) est identifié par le dispositif de commande (14) ;
**caractérisé en ce que** :
• au moins l'un desdits équipements électriques (31, 32) comprend :
▪ un dispositif de mesure (51, 52) de la fréquence du réseau électrique local (2), et
▪ un dispositif de contrôle (61, 62) apte à modifier la puissance électrique consommée ou injectée par ledit équipement électrique (31, 32) sur le réseau électrique local (2), en fonction de la fréquence du réseau électrique local (2) ;
• le dispositif d'interfaçage (1) assure une gestion locale des équipements électriques (31, 32) reliés au réseau électrique local (2), lorsque le dispositif onduleur bidirectionnel (10) fonctionne en mode maître, de sorte que la demande en énergie soit sensiblement égale à la fourniture d'énergie desdits équipements électriques (31, 32) du réseau électrique local (2).

2. Système électrique selon la revendication 1, dans lequel le dispositif de commande (14) est apte à commander le dispositif onduleur bidirectionnel (10) et le dispositif chargeur (12) afin que le dispositif d'interfaçage (1) fonctionne dans un état donné parmi au moins trois états possibles :
- un premier état (A) dans lequel le dispositif onduleur bidirectionnel (10) fonctionne dans un mode de régulation de la tension du réseau électrique local (2) et le dispositif chargeur (12) est inactif ;
- un deuxième état (B) dans lequel le dispositif onduleur bidirectionnel (10) fonctionne dans un mode de modulation de la fréquence du réseau électrique local (2) et le dispositif chargeur (12) est inactif ;
- un troisième état (C) dans lequel le dispositif onduleur bidirectionnel (10) fonctionne dans un mode de modulation de la fréquence du réseau électrique local (2) et le dispositif chargeur (12) est actif.

3. Système électrique selon la revendication 1 ou 2, comprenant en outre un interrupteur principal (13) relié d'une part à ladite borne de connexion générale (G) et d'autre part à ladite borne de connexion locale (L) ; le dispositif d'interfaçage (1) pouvant être placé dans :
∘ un mode de raccordement direct dans lequel l'interrupteur principal (13) est fermé, reliant directement les bornes de connexion générale (G) et locale (L), le dispositif onduleur bidirectionnel (10) étant alors soit éteint soit dans un mode esclave ; ou
∘ un mode de raccordement indirect dans lequel l'interrupteur principal (13) est ouvert, le dispositif onduleur bidirectionnel (10) étant alors actif en mode maître ; et
le dispositif de commande (14) étant apte à commander la fermeture ou l'ouverture de l'interrupteur principal (13) pour faire passer le dispositif d'interfaçage (1) respectivement dans un mode de raccordement direct ou indirect.

4. Système électrique selon les revendications 2 et 3, apte à être placé dans un mode de raccordement indirect pour les premier, deuxième et troisième états, et pouvant fonctionner dans un mode de raccordement direct pour un quatrième état dans lequel le dispositif chargeur (12) est inactif.

5. Système électrique selon l'une quelconque des revendications 1 à 4, dans lequel, pour identifier un besoin de faire transiter de l'énergie du réseau électrique général (3) vers le réseau électrique local (2), le dispositif de commande (14) tient compte d'un paramètre physique de la batterie (11), de préférence le niveau d'état de charge de la batterie (11) et/ou une valeur de puissance maximale délivrable ou absorbable par la batterie (11).

6. Système électrique selon l'une quelconque des revendications 1 à 5, comprenant en outre un onduleur esclave (200) placé en parallèle du dispositif chargeur (12), une entrée de l'onduleur esclave (200) étant reliée à l'entrée du dispositif onduleur bidirectionnel (10), et une sortie de l'onduleur esclave (200) étant reliée au réseau électrique général (3), le dispositif de commande (14) étant apte à commander la mise en route de l'onduleur esclave (200) quand le dispositif onduleur bidirectionnel maître (10) fonctionne dans ledit mode de régulation de fréquence et qu'un besoin de faire transiter de l'énergie du réseau électrique local (2) vers le réseau électrique général (3) est identifié par le dispositif de commande (14).

7. Système électrique selon les revendications 4 et 6, dans lequel l'onduleur esclave (200) est inactif dans les premier, deuxième, troisième et quatrième états, et dans lequel le dispositif d'interfaçage (1) peut fonctionner dans un cinquième état (C') dans lequel l'onduleur esclave (200) est actif et le dispositif onduleur bidirectionnel (10) fonctionne dans un mode de modulation de la fréquence du réseau électrique local (2).

8. Système électrique selon l'une quelconque des revendications 1 à 7, dans lequel, au moins l'un desdits équipements électriques (33) comprend en outre un dispositif de paramétrage (43) de son dispositif de contrôle (63), le paramétrage du dispositif de contrôle (63) permettant de modifier la loi de commande appliquée par le dispositif de contrôle (63) sur l'injection ou le soutirage de puissance en fonction de la fréquence du réseau électrique local (2).

9. Système électrique selon l'une quelconque des revendications 1 à 8, comportant une borne de recharge d'un véhicule (101) constituant l'un desdits équipements électriques, comprenant un chargeur (110) apte à recharger une batterie (102) dudit véhicule, un dispositif de mesure (111) de la fréquence du réseau électrique local (2) auquel la borne est reliée, et comprenant un dispositif de contrôle (112) recevant la mesure de fréquence et apte à commander le chargeur (110) pour faire varier la puissance prélevée sur le réseau électrique local (2) par le chargeur (110) en fonction de la fréquence mesurée sur le réseau électrique local (2).

10. Système électrique selon la revendication 9, comprenant en outre un onduleur esclave (200) apte à prélever de l'énergie de la batterie (11) et à injecter de l'énergie sur le réseau électrique local (2) auquel est reliée la borne de recharge, et dans laquelle ledit dispositif de contrôle (14) commande l'onduleur esclave (200) en fonction de la fréquence du réseau électrique local (2).

11. Système électrique selon l'une quelconque des revendications 1 à 10, comprenant un équipement électrique comportant un dispositif d'interface (44) placé entre le réseau électrique local (2), et au moins un appareil électrique se comportant comme une résistance électrique, le dispositif d'interface (44) modifiant la puissance transférée audit appareil électrique en fonction de la fréquence du réseau électrique local (2).

12. Système électrique selon l'une quelconque des revendications 1 à 11, comportant :
o au moins un réseau électrique local (2.2), dit secondaire, relié audit réseau électrique local (2) ;
o au moins un équipement électrique consommateur secondaire (31.2), et au moins un équipement électrique producteur secondaire (32.2), reliés au réseau électrique local secondaire (2.2),
• au moins l'un desdits équipements électriques secondaires (31.2, 32.2) comprenant un dispositif de mesure (51.2, 52.2) de la fréquence du réseau électrique local secondaire (2.2), et un dispositif de contrôle (61.2, 62.2) apte à modifier la puissance électrique consommée ou injectée par ledit équipement électrique secondaire (31.2, 32.2) sur le réseau électrique local secondaire (2.2), en fonction de la fréquence du réseau électrique local secondaire (2.2) ;
∘ au moins un second dispositif d'interfaçage (1.2), relié au réseau électrique local (2) et au réseau électrique secondaire (2.2), comprenant une batterie (11.2), un dispositif onduleur bidirectionnel (10.2), un dispositif chargeur (12.2) et un dispositif de commande (14.2),
• le dispositif d'interfaçage secondaire (1.2) étant ainsi adapté à assurer une gestion locale des équipements électriques secondaires (31.2, 32.2) reliés au réseau électrique local secondaire (2.2), lorsque le dispositif onduleur bidirectionnel (10.2) fonctionne en mode maître, de sorte que la demande en énergie soit sensiblement égale à la fourniture d'énergie desdits équipements électriques secondaires (31.2, 32.2).

13. Système électrique selon la revendication 12, dans lequel le dispositif d'interfaçage secondaire (1.2) comprend un dispositif de mesure de la fréquence du réseau électrique local (2) et le dispositif de commande (14.2) du dispositif d'interfaçage secondaire (1.2) étant apte à tenir compte de la mesure de fréquence du réseau électrique local (2) pour commander l'onduleur bidirectionnel (10.2), le chargeur (12.2) et éventuellement un onduleur esclave (200.2) du dispositif d'interfaçage secondaire (1.2).

## Patentansprüche

1. Elektrisches System, das aufweist:
∘ ein lokales Stromnetz (2);
∘ mindestens eine elektrische Verbrauchereinrichtung (31) und mindestens eine elektrische Erzeugereinrichtung (32), die mit dem lokalen Stromnetz (2) verbunden sind;
∘ eine Schnittstellenvorrichtung (1), die dazu bestimmt ist, das lokale Stromnetz (2) mit einem allgemeinen Stromnetz (3) zu verbinden und aufweist:
• eine allgemeine Anschlussstation (G), die dazu bestimmt ist, mit dem allgemeinen Stromnetz (3) verbunden zu werden, und eine lokale Anschlussstation (L), die mit dem lokalen Stromnetz (2) verbunden ist;
• eine Batterie (11);
• eine bidirektionale Wechselrichtervorrichtung (10), die im Master-Modus arbeiten kann und von der ein Ausgang mit der lokalen Anschlussstation (L) verbunden ist und ein Eingang mit der Batterie (11) verbunden ist, wobei die Wechselrichtervorrichtung (10) geeignet ist, in einem Frequenzmodulationsmodus zu arbeiten, in dem die Frequenz eines über ihren Ausgang abgegebenen Ausgangssignals in Abhängigkeit von einer Leistung, die zwischen der bidirektionalen Wechselrichtervorrichtung (10) und dem lokalen Stromnetz (2) ausgetauscht wird, variabel ist;
• eine Ladevorrichtung (12), von der ein Eingang mit der allgemeinen Anschlussstation (G) und ein Ausgang mit dem Eingang der Wechselrichtervorrichtung (10) verbunden ist;
• eine Steuerungsvorrichtung (14), die geeignet ist, das Einschalten der Ladevorrichtung (12) zu steuern, wenn die bidirektionale Wechselrichtervorrichtung (10) im Frequenzregelungsmodus arbeitet und wenn ein Bedarf, Energie vom allgemeinen Stromnetz zum lokalen Stromnetz (2) zu übertragen, von der Steuerungsvorrichtung (14) ermittelt wird;
**dadurch gekennzeichnet, dass**:
• mindestens eine der elektrischen Einrichtungen (31, 32) umfasst:
▪ eine Messvorrichtung (51, 52) zum Messen der Frequenz des lokalen Stromnetzes (2) und
▪ eine Steuerungsvorrichtung (61, 62), die geeignet ist, die von der elektrischen Einrichtung (31, 32) im lokalen Stromnetz (2) verbrauchte oder eingespeiste Leistung in Abhängigkeit von der Frequenz des lokalen Stromnetzes (2) zu ändern;
• die Schnittstellenvorrichtung (1) eine lokale Verwaltung der mit dem lokalen Stromnetz (2) verbundenen elektrischen Einrichtungen (31, 32) gewährleistet, wenn die bidirektionale Wechselrichtervorrichtung (10) im Master-Modus arbeitet, so dass die Energienachfrage im Wesentlichen gleich der Energielieferung der elektrischen Einrichtungen (31, 32) des lokalen Stromnetzes (2) ist.

2. Elektrisches System nach Anspruch 1, bei dem die Steuerungsvorrichtung (14) geeignet ist, die bidirektionale Wechselrichtervorrichtung (10) und die Ladevorrichtung (12) zu steuern, damit die Schnittstellenvorrichtung (1) in einem bestimmten unter mindestens drei möglichen Zuständen arbeitet:
- einem ersten Zustand (A), in dem die bidirektionale Wechselrichtervorrichtung (10) in einem Modus zur Regelung der Spannung des lokalen Stromnetzes (2) arbeitet und die Ladevorrichtung (12) inaktiv ist;
- einem zweiten Zustand (B), in dem die bidirektionale Wechselrichtervorrichtung (10) in einem Modus zur Modulation der Frequenz des lokalen Stromnetzes (2) arbeitet und die Ladevorrichtung (12) inaktiv ist;
- einem dritten Zustand (C), in dem die bidirektionale Wechselrichtervorrichtung (10) in einem Modus zur Modulation der Frequenz des lokalen Stromnetzes (2) arbeitet und die Ladevorrichtung (12) aktiv ist.

3. Elektrisches System nach Anspruch 1 oder 2, das ferner einen Hauptschalter (13) umfasst, der zum einen mit der allgemeinen Anschlussstation (G) und zum anderen mit der lokalen Anschlussstation (L) verbunden ist, wobei die Schnittstellenvorrichtung (1) versetzt werden kann in:
∘ einen Direktanschlussmodus, in dem der Hauptschalter (13) geschlossen ist und die allgemeine (G) und die lokale (L) Anschlussstation direkt verbindet, wobei die bidirektionale Wechselrichtervorrichtung (10) dann entweder ausgeschaltet ist oder in einem Slave-Modus ist; oder
∘ einen Indirektanschlussmodus, in dem der Hauptschalter (13) geöffnet ist, wobei die bidirektionale Wechselrichtervorrichtung (10) dann im Master-Modus aktiv ist; und
wobei die Steuerungsvorrichtung (14) geeignet ist, das Schließen oder das Öffnen des Hauptschalters (13) zu steuern, um die Schnittstellenvorrichtung (1) in einen Direkt- bzw. Indirektanschlussmodus übergehen zu lassen.

4. Elektrisches System nach den Ansprüchen 2 und 3, das geeignet ist, beim ersten, zweiten und dritten Zustand in einen Indirektanschlussmodus versetzt zu werden und das bei einem vierten Zustand, in dem die Ladevorrichtung (12) inaktiv ist, in einem Direktanschlussmodus arbeiten kann.

5. Elektrisches System nach einem der Ansprüche 1 bis 4, bei dem, um einen Bedarf zu ermitteln, Energie aus dem allgemeinen Stromnetz (3) zum lokalen Stromnetz (2) übertragen zu lassen, die Steuerungsvorrichtung (14) einen physischen Parameter der Batterie (11) berücksichtigt, bevorzugt den Ladezustand der Batterie (11) und/oder einen Höchstwert der von der Batterie (11) abgebbaren oder aufnehmbaren Leistung.

6. Elektrisches System nach einem der Ansprüche 1 bis 5, das ferner einen Slave-Wechselrichter (200) umfasst, der parallel zur Ladevorrichtung (12) angeordnet ist, wobei ein Eingang des Slave-Wechselrichters (200) mit dem Eingang der bidirektionalen Wechselrichtervorrichtung (10) verbunden ist und ein Ausgang des Slave-Wechselrichters (200) mit dem allgemeinen Stromnetz (3) verbunden ist, wobei die Steuerungsvorrichtung (14) geeignet ist, das Einschalten des Slave-Wechselrichters (200) zu steuern, wenn die bidirektionale Master-Wechselrichtervorrichtung (10) im Frequenzregelungsmodus arbeitet und ein Bedarf, Energie vom lokalen Stromnetz (2) zum allgemeinen Stromnetz (3) übertragen zu lassen, von der Steuerungsvorrichtung (14) ermittelt wird.

7. Elektrisches System nach den Ansprüchen 4 und 6, bei dem der Slave-Wechselrichter (200) im ersten, zweiten, dritten und vierten Zustand inaktiv ist und bei dem die Schnittstellenvorrichtung (1) in einem fünften Zustand (C') arbeiten kann, in dem der Slave-Wechselrichter (200) aktiv ist und die bidirektionale Wechselrichtervorrichtung (10) in einem Modus zur Modulation der Frequenz des lokalen Stromnetzes (2) arbeitet.

8. Elektrisches System nach einem der Ansprüche 1 bis 7, bei dem mindestens eine der elektrischen Einrichtungen (33) ferner eine Parametrierungsvorrichtung (43) zur Parametrierung ihrer Steuerungsvorrichtung (63) umfasst, wobei die Parametrierung der Steuerungsvorrichtung (63) es ermöglicht, die Steuerungsgesetzmäßigkeit zu ändern, die von der Steuerungsvorrichtung (63) auf die Einspeisung oder die Entnahme von Leistung in Abhängigkeit von der Frequenz des lokalen Stromnetzes (2) angewandt wird.

9. Elektrisches System nach einem der Ansprüche 1 bis 8 mit einer Aufladestation für ein Fahrzeug (101), die eine der elektrischen Einrichtungen bildet, umfassend ein Ladegerät (110), das geeignet ist, eine Batterie (102) des Fahrzeugs aufzuladen, eine Messvorrichtung (111) zum Messen der Frequenz des lokalen Stromnetzes (2), mit dem die Station verbunden ist, und umfassend eine Steuerungsvorrichtung (112), welche die Frequenzmessung empfängt und geeignet ist, das Ladegerät (110) zu steuern, um die vom Ladegerät (110) im lokalen Stromnetz (2) entnommene Leistung in Abhängigkeit von der im lokalen Stromnetz (2) gemessenen Frequenz variieren zu lassen.

10. Elektrisches System nach Anspruch 9, das ferner einen Slave-Wechselrichter (200) umfasst, der geeignet ist, Energie aus der Batterie (11) zu entnehmen und Energie in das lokale Stromnetz (2) einzuspeisen, mit dem die Aufladestation verbunden ist, und bei dem die Steuerungsvorrichtung (14) den Slave-Wechselrichter (200) in Abhängigkeit von der Frequenz des lokalen Stromnetzes (2) steuert.

11. Elektrisches System nach einem der Ansprüche 1 bis 10, das eine elektrische Einrichtung umfasst, die eine Schnittstellenvorrichtung (44) aufweist, die zwischen dem lokalen Stromnetz (2) und mindestens einem elektrischen Gerät angeordnet ist, das sich wie ein elektrischer Widerstand verhält, wobei die Schnittstellenvorrichtung (44) die an das elektrische Gerät übertragene Leistung in Abhängigkeit von der Frequenz des lokalen Stromnetzes (2) ändert.

12. Elektrisches System nach einem der Ansprüche 1 bis 11, das aufweist:
∘ mindestens ein sogenanntes sekundäres lokales Stromnetz (2.2), das mit dem lokalen Stromnetz (2) verbunden ist;
∘ mindestens eine sekundäre elektrische Verbrauchereinrichtung (31.2) und mindestens eine sekundäre elektrische Erzeugereinrichtung (32.2), die mit dem sekundären lokalen Stromnetz (2.2) verbunden sind,
• wobei mindestens eine der sekundären elektrischen Einrichtungen (31.2, 32.2) eine Messvorrichtung (51.2, 52.2) zum Messen der Frequenz des sekundären lokalen Stromnetzes (2.2) umfasst und eine Steuerungsvorrichtung (61.2, 62.2), die geeignet ist, die von der sekundären elektrischen Einrichtung (31.2, 32.2) im sekundären lokalen Stromnetz (2.2) verbrauchte oder eingespeiste elektrische Leistung in Abhängigkeit von der Frequenz des sekundären lokalen Stromnetzes (2.2) zu ändern;
∘ mindestens eine zweite Schnittstellenvorrichtung (1.2), die mit dem lokalen Stromnetz (2) und mit dem sekundären Stromnetz (2.2) verbunden ist und eine Batterie (11.2), eine bidirektionale Wechselrichtervorrichtung (10.2), eine Ladevorrichtung (12.2) und eine Steuerungsvorrichtung (14.2) umfasst,
• wobei die sekundäre Schnittstellenvorrichtung (1.2) somit geeignet ist, eine lokale Verwaltung der mit dem sekundären lokalen Stromnetz (2.2) verbundenen sekundären elektrischen Einrichtungen (31.2, 32.2) zu gewährleisten, wenn die bidirektionale Wechselrichtervorrichtung (10.2) im Master-Modus arbeitet, so dass die Energienachfrage im Wesentlichen gleich der Energielieferung der sekundären elektrischen Einrichtungen (31.2, 32.2) ist.

13. System nach Anspruch 12, bei dem die sekundäre Schnittstellenvorrichtung (1.2) eine Messvorrichtung zum Messen der Frequenz des lokalen Stromnetzes (2) umfasst und die Steuerungsvorrichtung (14.2) der sekundären Schnittstellenvorrichtung (1.2) geeignet ist, die Frequenzmessung des lokalen Stromnetzes (2) zu berücksichtigen, um den bidirektionalen Wechselrichter (10.2), das Ladegerät (12.2) und gegebenenfalls einen Slave-Wechselrichter (200.2) der sekundären Schnittstellenvorrichtung (1.2) zu steuern.

## Claims

1. Electrical system including:
∘ a local electrical grid (2);
∘ at least one energy-consuming item of electrical equipment (31) and at least one energy-producing item of electrical equipment (32), said items of electrical equipment being connected to the local electrical grid (2);
∘ an interfacing device (1), which is intended to connect the local electrical grid (2) to a general electrical grid (3) and includes:
• a general connection terminal (G), which is intended to be connected to the general electrical grid (3), and a local connection terminal (L), which is connected to the local electrical grid (2);
• a battery (11);
• a bidirectional inverter device (10), which is able to operate in master mode, an output of which is connected to said local connection terminal (L) and an input of which is connected to said battery (11), the inverter device (10) being able to operate in a frequency-modulation mode in which the frequency of an output signal delivered at the output thereof is variable on the basis of a power exchanged between the bidirectional inverter device (10) and said local electrical grid (2);
• a charger device (12), an input of which is connected to said general connection terminal (G) and an output of which is connected to said input of the inverter device (10);
• a control device (14), which is able to control the startup of the charger device (12) when the bidirectional inverter device (10) is operating in said frequency-regulation mode and the control device (14) identifies a need to convey energy from the general electrical grid to the local electrical grid (2);
**characterized in that**:
• at least one of said items of electrical equipment (31, 32) comprises:
▪ a measuring device (51, 52) for measuring the frequency of the local electrical grid (2) and
▪ a control unit (61, 62), which is able to modify the electrical power consumed from or injected into the local electrical grid (2) by said item of electrical equipment (31, 32) on the basis of the frequency of the local electrical grid (2);
• the interfacing device (1) provides local management of the items of electrical equipment (31, 32) connected to the local electrical grid (2) when the bidirectional inverter device (10) is operating in master mode, with the result that the energy demand of said items of electrical equipment (31, 32) of the local electrical grid (2) is substantially equal to the energy that they supply.

2. Electrical system according to Claim 1, wherein the control device (14) is able to control the bidirectional inverter device (10) and the charger device (12) in order for the interfacing device (1) to operate in a given state from among at least three possible states:
- a first state (A) in which the bidirectional inverter device (10) operates in a voltage-regulation mode in which it regulates the voltage of the local electrical grid (2), and the charger device (12) is inactive;
- a second state (B) in which the bidirectional inverter device (10) operates in a frequency-modulation mode in which it modulates the frequency of the local electrical grid (2), and the charger device (12) is inactive;
- a third state (C) in which the bidirectional inverter device (10) operates in a frequency-modulation mode in which it modulates the frequency of the local electrical grid (2), and the charger device (12) is active.

3. Electrical system according to Claim 1 or 2, further comprising a main switch (13) connected both to said general connection terminal (G) and to said local connection terminal (L); the interfacing device (1) being able to be placed in:
∘ a direct connection mode in which the main switch (13) is closed, directly connecting the general connection terminal (G) and the local connection terminal (L), the bidirectional inverter device (10) then being either off or in a slave mode; or
∘ an indirect connection mode in which the main switch (13) is open, the bidirectional inverter device (10) then being active in master mode; and
the control device (14) being able to control the closing or opening of the main switch (13) in order to switch the interfacing device (1) into a direct or an indirect connection mode, respectively.

4. Electrical system according to Claims 2 and 3, which is able to be placed in an indirect connection mode for the first, second and third states and which can operate in a direct connection mode for a fourth state in which the charger device (12) is inactive.

5. Electrical system according to any one of Claims 1 to 4, wherein, in order to identify a need to convey energy from the general electrical grid (3) to the local electrical grid (2), the control device (14) takes into account a physical parameter of the battery (11), preferably the state-of-charge level of the battery (11) and/or a maximum power value that the battery (11) can deliver or absorb.

6. Electrical system according to any one of Claims 1 to 5, further comprising a slave inverter (200) placed in parallel with the charger device (12), an input of the slave inverter (200) being connected to the input of the bidirectional inverter device (10), and an output of the slave inverter (200) being connected to the general electrical grid (3), the control device (14) being able to control the startup of the slave inverter (200) when the master bidirectional inverter device (10) is operating in said frequency-regulation mode and the control device (14) identifies a need to convey energy from the local electrical grid (2) to the general electrical grid (3).

7. Electrical system according to Claims 4 and 6, wherein the slave inverter (200) is inactive in the first, second, third and fourth states, and wherein the interfacing device (1) can operate in a fifth state (C') in which the slave inverter (200) is active and the bidirectional inverter device (10) operates in a frequency-modulation mode in which it modulates the frequency of the local electrical grid (2).

8. Electrical system according to any one of Claims 1 to 7, wherein at least one of said items of electrical equipment (33) further comprises a configuration device (43) for configuring its control unit (63), the configuration of the control unit (63) making it possible to modify the control law applied by the control unit (63) to the injection or drawing of power on the basis of the frequency of the local electrical grid (2).

9. Electrical system according to any one of Claims 1 to 8, including a charging station for a vehicle (101), said charging station constituting one of said items of electrical equipment and comprising a charger (110), which is able to recharge a battery (102) of said vehicle, a measuring device (111) for measuring the frequency of the local electrical grid (2) to which the charging station is connected, and comprising a control unit (112), which receives the frequency measurement and is able to control the charger (110) in order to vary the power taken from the local electrical grid (2) by the charger (110) on the basis of the frequency measured on the local electrical grid (2).

10. Electrical system according to Claim 9, further comprising a slave inverter (200), which is able to take energy from the battery (11) and inject energy into the local electrical grid (2) to which the charging station is connected, and wherein said control unit (14) controls the slave inverter (200) on the basis of the frequency of the local electrical grid (2).

11. Electrical system according to any one of Claims 1 to 10, comprising an item of electrical equipment including an interface device (44) placed between the local electrical grid (2) and at least one electrical apparatus that acts as an electrical resistor, the interface device (44) modifying the power transferred to said electrical apparatus on the basis of the frequency of the local electrical grid (2).

12. Electrical system according to any one of Claims 1 to 11, including:
∘ at least one local electrical grid (2.2), which is known as the secondary local electrical grid and is connected to said local electrical grid (2);
∘ at least one secondary energy-consuming item of electrical equipment (31.2) and at least one secondary energy-producing item of electrical equipment (32.2), said items of electrical equipment being connected to the secondary local electrical grid (2.2),
• at least one of said secondary items of electrical equipment (31.2, 32.2) comprising a measuring device (51.2, 52.2) for measuring the frequency of the secondary local electrical grid (2.2) and a control unit (61.2, 62.2), which is able to modify the electrical power consumed from or injected into the secondary local electrical grid (2.2) by said secondary item of electrical equipment (31.2, 32.2) on the basis of the frequency of the secondary local electrical grid (2.2);
∘ at least one second interfacing device (1.2), which is connected to the local electrical grid (2) and to the secondary electrical grid (2.2) and comprises a battery (11.2), a bidirectional inverter device (10.2), a charger device (12.2) and a control device (14.2),
• the secondary interfacing device (1.2) thus being designed to provide local management of the secondary items of electrical equipment (31.2, 32.2) connected to the secondary local electrical grid (2.2) when the bidirectional inverter device (10.2) is operating in master mode, with the result that the energy demand of said secondary items of electrical equipment (31.2, 32.2) is substantially equal to the energy that they supply.

13. Electrical system according to Claim 12, wherein the secondary interfacing device (1.2) comprises a measuring device for measuring the frequency of the local electrical grid (2), and the control device (14.2) of the secondary interfacing device (1.2) is able to take into account the measurement of the frequency of the local electrical grid (2) in order to control the bidirectional inverter (10.2), the charger (12.2) and optionally a slave inverter (200.2) of the secondary interfacing device (1.2).
